# EUROPEAN PATENT SPECIFICATION

(11) **EP 3 514 015 B1**
(45) Date of publication and mention of the grant of the patent: **05.08.2020**
(21) Application number: 19151221.9
(22) Date of filing: 10.01.2019
(51) Int. Cl.: B60R 1/06, B60J 11/06

(54) **MIRROR PROTECTOR**
SPIEGELSCHUTZ
PROTECTEUR DE MIROIR

(30) Priority: 19.01.2018 GB 201800893
(43) Date of publication of application: 24.07.2019
(73) Proprietor: Milenco Limited, Wolverton Mill Milton Keynes MK12 5TS (GB)
(72) Inventor: Milbank, Frederick Nigel, Milton Keynes, Buckinghamshire MK13 0RA (GB)
(74) Representative: Turner, Richard Charles

(56) References cited:
- GB-A- 2 551 867
- US-S- D 686 126
- Anonymous: "Towsure 2017; Everything for the great outdoors", , 6 February 2017 (2017-02-06), pages 134-135, XP055569963, Retrieved from the Internet: URL:https://issuu.com/towsure/docs/towsure _2017_issu [retrieved on 2019-03-15]
- Anonymous: "Towsure 2019; Everything for the great outdoors", , 15 March 2019 (2019-03-15), pages 156-157, XP055569947, Retrieved from the Internet: URL:https://issuu.com/towsure/docs/towsure -2019-issuu [retrieved on 2019-03-15]
- Anonymous: "bigwhitebox.co.uk; Motorhome mirror protector", , 31 May 2018 (2018-05-31), XP055569971, Retrieved from the Internet: URL:https://bigwhitebox.co.uk/wp-content/u ploads/2016/01/Motorhome-Mirror-Protector. jpg [retrieved on 2019-03-15]
- Anonymous: "Kuda Automotive Launches MirrorShield", , 11 August 2016 (2016-08-11), XP055569974, Retrieved from the Internet: URL:https://www.kudauk.ltd.uk/news/2016/08 /11/kuda-automotive-launches-mirrorshield [retrieved on 2019-03-15]

## Description

This invention relates to a mirror protector.

Motor vehicles such as cars, vans and lorries are usually provided with wing mirrors (sometimes called side view mirrors) that are mounted on the side of the vehicle, which allow the driver of the vehicle to see along the side of their vehicle and behind, without having to turn their head a great distance. In many jurisdictions, the provision of wing mirrors on a motor vehicle is compulsory and it is illegal to drive such a vehicle without properly functioning wing mirrors. However, such wing mirrors are very susceptible to damage, since they extend out from the body of the motor vehicle to which they are connected and many drivers underestimate the width of their vehicle plus the wing mirrors and/or underestimate the width of other road vehicles.

In order to combat damage to wing mirrors, it is known to provide a mirror protector that can be retrofitted onto an existing wing mirror. It is known for example from the Towsure ® 2017 catalogue to provide a mirror protector comprising a body for fitting over a vehicle wing mirror, the body including an indent in one side of the body such that the mirror protector, when retrofitted to the vehicle wing mirror, allows an exterior light such as an indicator light on the vehicle wing mirror to be seen. The mirror protector is normally formed of plastics material and is fitted onto the wing mirror to protect the wing mirror from minor collisions. Should the mirror protector be damaged, it can be replaced much more easily and cheaply than the cost of replacing a vehicle wing mirror being protected. Such mirror protectors are often used on commercial vehicles as these are often driven less carefully than private vehicles. It is also relatively common for a vehicle wing mirror to include an external light such as an indicator light. Since such a light has to be seen clearly by other road users, this is often a weak spot that is not properly protected by a mirror protector.

It is therefore an object of the invention to improve upon the known art.

According to the present invention, there is provided a mirror protector comprising a body for fitting over a vehicle wing mirror, the body including an indent in one side of the body, the mirror protector, when retrofitted to the vehicle wing mirror, allowing an exterior light such as an indicator light on the vehicle wing mirror to be seen, characterised in that the indent includes one or more notches extending outwards from the body and into the indent, each notch comprising a rib on the surface of the body.

Owing to the invention, it is possible to provide a mirror protector that can be retrofitted to an existing wing mirror and will allow an exterior light such as an indicator light on the wing mirror to be seen, while also providing some measure of protection for the indicator light. The mirror protector is positioned on the wing mirror such that the external light is located within the indent on the mirror protector and the notches on the mirror protector will protect the external light from a potential collision while also ensuring that the external light can be seen by other road users.

Preferably, a notch is located centrally within the indent, the indent includes three notches and the notches are evenly spaced within the indent. This preferable arrangement of the notches on the mirror protector provides a good balance between allowing visibility for any indicator lights on the exterior of the wing mirror to which the mirror protector is fixed, while also providing sufficient protection for the indicator light in the event of a collision involving the wing mirror (protected by the mirror protector) and another object,

Advantageously, the body further includes one or more additional notches extending outwards from the body on the same side of the body as the indent, the additional notches not being located in the indent. In a preferred embodiment, the body further includes two additional notches, one additional notch located on either side of the indent. The additional notches provide further protection for the mirror protector and therefore the wing mirror on which the mirror protector. As they are located on the outside of the mirror protector, the two additional notches help to deflect blows away from the mirror protector.

Embodiments of the present invention will now be described, by way of example only, with reference to the accompanying drawings, in which:-
Figure 1 is a front view of a mirror protector,
Figure 2 is a perspective view from the front and below of the mirror protector,
Figure 3 is a front view of a mirror protector mounted on a wing mirror, and
Figure 4 is a perspective view from the rear and below of the mirror protector.

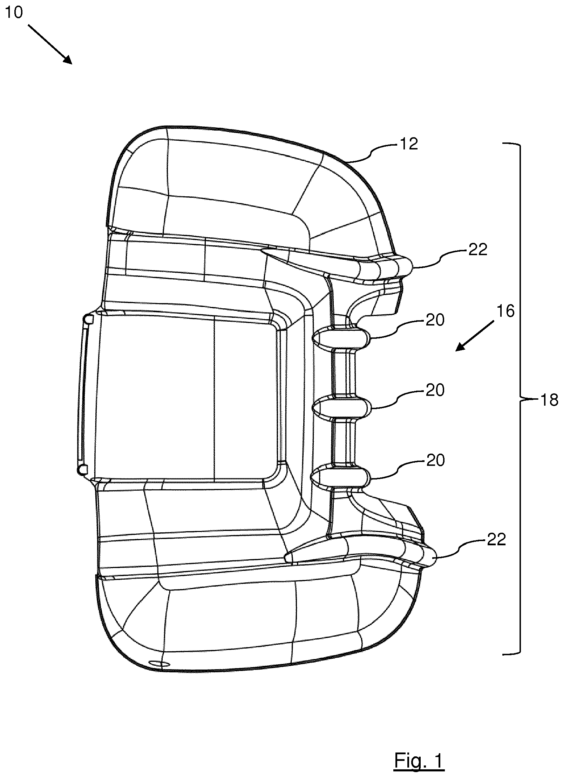

Figure 1 shows a front view of a mirror protector 10 comprising a body 12 for fitting over a vehicle wing mirror, the body 12 including an indent 16 in one side 18 of the body 12, the indent 16 including multiple notches 20 extending outwards from the body 12 and into the indent 16. One notch 20 is located centrally within the indent 16. In total, the indent 16 includes three notches 20 and the notches 20 are evenly spaced within the indent 16. Each notch 20 extends into the indent 16 by no more than 50% of the width of the indent 16. The indent 16 provides an open area for an external light on the wing mirror to remain visible, with the notches 20 protecting the light against damage. Each notch 20 comprises a rib 20 on the surface of the body 12.

The body 12 further includes multiple additional notches 22 extending outwards from the body 12 on the same side 18 of the body 12 as the indent 16, the additional notches 22 not being located in the indent 16. In the preferred arrangement, the body 12 further includes two additional notches 22, one additional notch 22 located on either side of the indent 16. These additional notches 22 provide additional protection for the mirror protector 10 and therefore for the wing mirror on which the mirror protector 10 is mounted. The two sets of notches 20 and 22 provide protection for the body 12 of the mirror protector in the event of a collision. Each additional notch 22 comprises a rib 22 on the surface of the body 12.

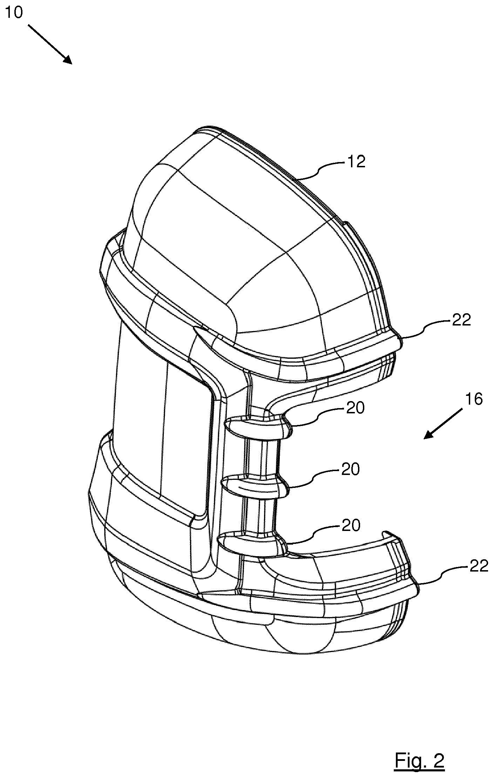

Figure 2 shows the mirror protector 10 in a perspective from below and from one side. The body 12 is formed with a shell like shape from a single piece of moulded plastics material. The mirror protector 10 is for retrofitting to an existing vehicle wing mirror such as the wing mirror of a commercial van and the mirror protector will assist in protecting the wing mirror from damage, in the event of a collision that causes contact to the wing mirror. The three notches 20 can be seen in the Figure, which are located within the indent 16 that is present on the one side 18 of the body 12 of the mirror protector 10.

The elongate additional notches 22 can also be seen which are located on opposite sides of the indent 16, which in normal operation of the mirror protector will be above and below the indent 16. These notches 22 are parallel to each other and terminate at the edge of the body 12. These additional notches 22 provide further protection for the vehicle wing mirror in the region of the indent 16, helping to deflect objects away from the open area of the mirror protector 10. The open area defined by the indent 16 is designed to allow an indicator light on the wing mirror to be seen by other road users.

The three notches 20 within the indent 16 and the two additional notches 22 on either side of the indent 16 provide protection for the indicator light that is present on the wing mirror on which the mirror protector 10 is mounted, while allowing the indicator light to be visible. The curvature of the body 12 of the mirror protector 10 also allows collisions to be deflected as best as possible, with the two sets of notches 20 and 22 each having a curved exterior profile. A perpendicular cross section through each of the notches 20 and 22 has a curved exterior line. These curves help to deflect collisions from the mirror protector 10 and prevent damage.

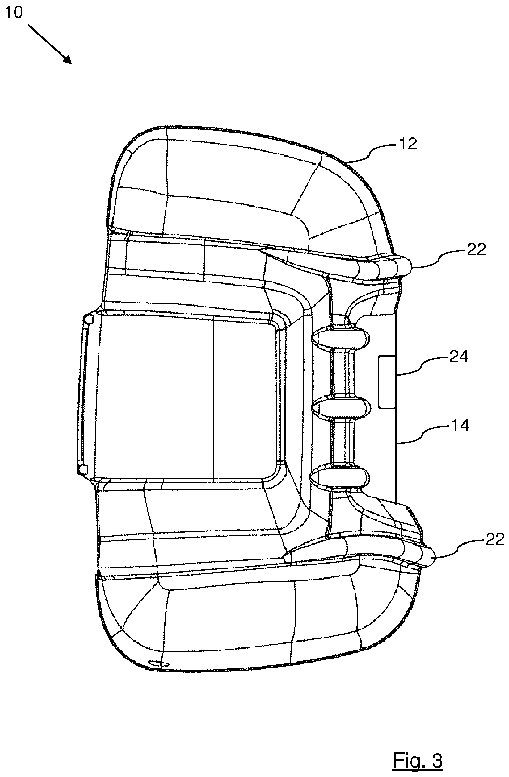

Figure 3 shows a view similar to Figure 1, but here the mirror protector 10 is shown mounted on a wing mirror 14 (also known as a side view mirror). Only a small part of the wing mirror 14 is visible, in the location of the indent 16 of the mirror protector 10. The remainder of the wing mirror 14 is covered by the body 12 of the mirror protector 10. An indicator light 24 can be seen, which is part of the wing mirror 14. The indicator light 24 must not be covered by the mirror protector 10, as the purpose of the indicator light 24 is to provide other road users with a warning that the motor vehicle is turning or about to turn.

The indent 16 matches up with the indicator light 24, and this can be because the mirror protector 10 is specifically designed for the vehicle type in question on which the mirror protector 10 is mounted or because a more general mirror protector 10 is used, which is designed to be fitted to the wing mirrors of many different makes and models of vehicle. In the latter case, many wing mirrors are similar in their size and shape, with the indicator light 24 often being located in a similar location on the outside of the wing mirror 14 and usually towards the middle of the side 18 where it is located.

As can be seen in this Figure, the three notches 20 are constructed and located in order to provide protection for the indicator light 24 of the wing mirror 14 in the event of a collision to the vehicle wing mirror 14. An blow in the locality of the indicator light 24 will stand a good chance of being deflected by one or more of the notches 20, which are located in the indent 16 and extend outwards into the indent 16 by a distance not greater than 50% of the width of the indent 16. The additional notches 22 which are located one on either side of the indent 16 provide additional protection in the vicinity of the indent 16.

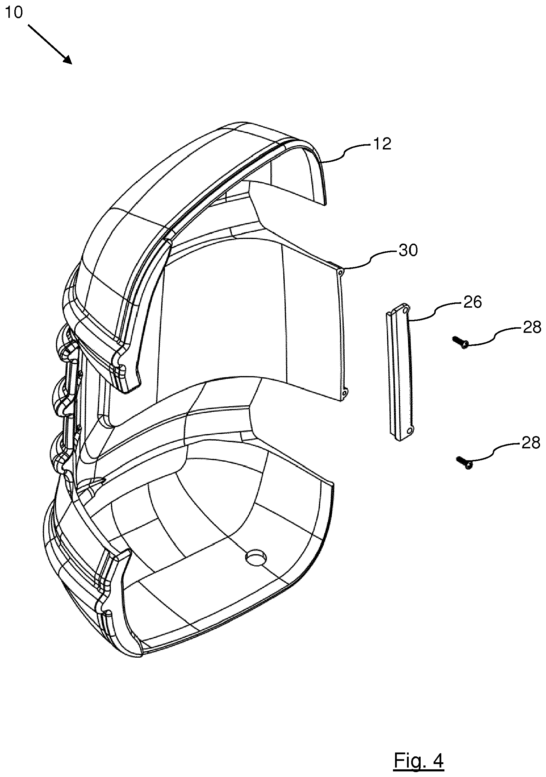

Figure 4 shows a view of the mirror protector 10 from the rear. The body 12 can be seen from the opposite side from the views shown in the previous Figures. The body 12 is formed as a single piece of moulded plastics material which is formed in a single plastics mould using a technique such as injection moulding. The body 12 is in the shape of a shell that covers the front of a wing mirror 14 and provides as much protection as possible for collisions involving the wing mirror 14, with any contact likely to be with the mirror protector 10 and not with the wing mirror 14 itself.

The mirror protector 10 further includes a fixing plate 26 which can be used to fix the mirror protector 10 in place on the wing mirror 14. Screws 28 are provided which mate with screw holes 30 provided in the body 12 of the mirror protector 10. In order to mount the mirror protector 10 onto a wing mirror 14, then the body 12 alone is mounted onto the front of the wing mirror 14 and the fixing plate 26 is then brought into contact with body 12 of the mirror protector 10 and fixed in place with the screws 28. The fixing plate 26 essentially acts as an anchor, holding the body 12 in place tightly against the wing mirror 14.

In this way a mirror protector 10 can be retrofitted to an existing wing mirror 14. The mirror protector 10 allows an exterior light such as an indicator light 24 on the wing mirror 14 to be seen, while also providing protection for the indicator light 24. The mirror protector 10 is positioned on the wing mirror 14 such that the indicator light 24 is located within the indent 16 on the mirror protector 10 and the notches 20 on the mirror protector 10 protect the indicator light 24 from a potential collision while also ensuring that the indicator light 24 can be seen by other road users.

## Claims

1. A mirror protector (10) comprising a body (12) for fitting over a vehicle wing mirror (14), the body (12) including an indent (16) in one side (18) of the body (12) such that the mirror protector (10), when retrofitted to the vehicle wing mirror (14), allows an exterior light such as an indicator light on the vehicle wing mirror (14) to be seen, **characterised in that** the indent (16) includes one or more notches (20) extending outwards from the body (12) and into the indent (16), each notch (20) comprising a rib (20) on the surface of the body (12).

2. A mirror protector according to claim 1, wherein a notch (20) is located centrally within the indent (16).

3. A mirror protector according to claim 1 or 2, wherein the indent (16) includes three notches (20).

4. A mirror protector according to claim 3, wherein the notches (20) are evenly spaced within the indent (16).

5. A mirror protector according to any preceding claim, wherein the or each notch (20) extends into the indent (16) by no more than 50% of the width of the indent (16).

6. A mirror protector according to any preceding claim, wherein the body (12) further includes one or more additional notches (22) extending outwards from the body (12) on the same side (18) of the body (12) as the indent (16), the additional notches (22) not being located in the indent (16).

7. A mirror protector according to claim 6, wherein the body (12) further includes two additional notches (22), one additional notch (22) located on either side of the indent (16).

## Patentansprüche

1. Spiegelschutz (10), umfassend ein Gehäuse (12) zum Anbringen über einen Fahrzeugseitenspiegel (14), wobei das Gehäuse (12) eine derartige Einkerbung (16) in einer Seite (18) des Gehäuses (12) aufweist, dass der Spiegelschutz (10), wenn er an den Fahrzeugseitenspiegel (14) nachgerüstet ist, einem Außenlicht wie einem Blinklicht gestattet, dass es am Fahrzeugseitenspiegel (14) gesehen wird, **dadurch gekennzeichnet, dass** die Einkerbung (16) eine oder mehrere Aussparungen (20) aufweist, die sich von dem Gehäuse (12) nach außen und in die Einkerbung (16) erstreckt, wobei jede Aussparung (20) eine Rippe (20) auf der Oberfläche des Gehäuses (20) umfasst.

2. Spiegelschutz nach Anspruch 1, wobei eine Aussparung (20) sich mittig in der Einkerbung (16) befindet.

3. Spiegelschutz nach Anspruch 1 oder 2, wobei die Einkerbung (16) drei Aussparungen (20) aufweist.

4. Spiegelschutz nach Anspruch 3, wobei die Aussparungen (20) gleichmäßig in der Einkerbung (16) verteilt sind.

5. Spiegelschutz nach einem der vorhergehenden Ansprüche, wobei die oder jede Aussparung (20) sich in die Einkerbung (16) um nicht mehr als 50 % der Breite der Einkerbung (16) erstreckt.

6. Spiegelschutz nach einem der vorhergehenden Ansprüche, wobei das Gehäuse (12) ferner eine oder mehrere zusätzliche Aussparungen (22) aufweist, die sich auf der gleichen Seite (18) des Gehäuses (12) wie die Aussparung (16) von dem Gehäuse (12) nach außen erstrecken, wobei sich die zusätzlichen Aussparungen (22) nicht in der Einkerbung (16) befinden.

7. Spiegelschutz nach Anspruch 6, wobei das Gehäuse (12) ferner zwei zusätzliche Aussparungen (22) aufweist, wobei sich eine zusätzliche Aussparung (22) auf einer von beiden Seiten der Einkerbung (16) befindet.

## Revendications

1. Protection de rétroviseur (10) comprenant un corps (12) destiné à être monté sur un rétroviseur latéral de véhicule (14), le corps (12) incluant une indentation (16) dans un côté (18) du corps (12), de sorte que la protection de rétroviseur (10), lorsqu'elle est montée a posteriori sur le rétroviseur latéral de véhicule (14), permet à une lumière extérieure telle qu'un voyant lumineux sur le rétroviseur latéral de véhicule (14) d'être vue, **caractérisée en ce que** l'indentation (16) inclut une ou plusieurs encoches (20) s'étendant vers l'extérieur à partir du corps (12) et dans l'indentation (16), chaque encoche (20) comprenant une nervure (20) sur la surface du corps (12).

2. Protection de rétroviseur selon la revendication 1, dans laquelle une encoche (20) est disposée de manière centrale dans l'indentation (16).

3. Protection de rétroviseur selon la revendication 1 ou 2, dans laquelle l'indentation (16) inclut trois encoches (20).

4. Protection de rétroviseur selon la revendication 3, dans laquelle les encoches (20) sont espacées de façon homogène dans l'indentation (16).

5. Protection de rétroviseur selon l'une quelconque des revendications précédentes, dans laquelle l'encoche ou chaque encoche (20) s'étend dans l'indentation (16) sur 50% maximum de la largeur de l'indentation (16).

6. Protection de rétroviseur selon l'une quelconque des revendications précédentes, dans laquelle le corps (12) inclut en outre une ou plusieurs encoches supplémentaires (22) s'étendant vers l'extérieur à partir du corps (12) sur le même côté (18) du corps (12) que l'indentation (16), les encoches supplémentaires (22) n'étant pas disposées dans l'indentation (16).

7. Protection de rétroviseur selon la revendication 6, dans laquelle le corps (12) inclut en outre deux encoches supplémentaires (22), notamment une encoche supplémentaire (22) disposée sur chaque côté de l'indentation (16).
